(19) Europäisches Patentamt
European Patent Office
Office européen des brevets

(11) Veröffentlichungsnummer: **0 337 105 B1**

(12) **EUROPÄISCHE PATENTSCHRIFT**

(45) Veröffentlichungstag der Patentschrift: **08.09.93**

(51) Int. Cl.[5]: **C08L 69/00**, C08L 67/02, C08L 55/02

(21) Anmeldenummer: **89103972.9**

(22) Anmeldetag: **07.03.89**

# (54) Thermoplastische Formmassen enthaltend aliphatische Polycarbonate.

(30) Priorität: **17.03.88 DE 3808840**

(43) Veröffentlichungstag der Anmeldung:
**18.10.89 Patentblatt 89/42**

(45) Bekanntmachung des Hinweises auf die Patenterteilung:
**08.09.93 Patentblatt 93/36**

(84) Benannte Vertragsstaaten:
**DE FR GB IT**

(56) Entgegenhaltungen:
**EP-A- 0 208 107**
**EP-A- 0 236 862**
**EP-A- 0 248 308**
**EP-A- 0 281 837**

(73) Patentinhaber: **BAYER AG**
**D-51368 Leverkusen(DE)**

(72) Erfinder: **Leitz, Edgar, Dr.**
**Goethestrasse 63**
**D-4047 Dormagen(DE)**
Erfinder: **Eichenauer, Herbert, Dr.**
**Gustav-Heinemann-Strasse 3**
**D-4047 Dormagen 1(DE)**
Erfinder: **Ott, Karl-Heinz, Dr.**
**Paul-Klee-Strasse 54**
**D-5090 Leverkusen(DE)**
Erfinder: **Eckel, Thomas, Dr.**
**Gneisenaustrasse 15a**
**D-4047 Dormagen 1(DE)**
Erfinder: **Peters, Horst, Dr.**
**Winterbergstrasse 25**
**D-5090 Leverkusen(DE)**
Erfinder: **Schoeps, Jochen, Dr.**
**Windmühlenstrasse 126**
**D-4150 Krefeld(DE)**

EP 0 337 105 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung sind thermoplastische Formmassen enthaltend

1.) thermoplastische, aromatische Polycarbonate

2.) Pfropfpolymerisate, erhältlich durch Pfropfung von 2.1.) 5 bis 90 Gew.-Teilen einer Mischung aus

2.1.1.) 50 bis 95 Gew.-Teilen Styrol, α-Methylstyrol, kernsubstituiertem Styrol, Methylmethacrylat oder Mischungen daraus und

2.1.2.) 50 bis 5 Gew.-Teilen Acrylnitril, Methacrylnitril, Methylmethacrylat, Maleinsäureanhydrid, N-substituiertem Maleinimid oder Mischungen daraus auf

2.2.) 95 bis 10 Gew.-Teile eines Kautschuks mit einer Glastemperatur $T_G \leqq 10\,^\circ C$ und gegebenenfalls

2.a) thermoplastische Copolymerisate, erhältlich durch Copolymerisation von

2.a.1.) 50 bis 95 Gew.-Teilen Styrol, α-Methylstyrol, kernsubstituiertem Styrol, Methylmethacrylat oder Mischungen daraus mit

2.a.2.) 50 bis 5 Gew.-Teilen Acrylnitril, Methacrylnitril, Methylmethacrylat, N-substituiertem Maleinimid oder Mischungen daraus,

wobei die Komponente 1) in Mengen von 15 bis 97,5 Gew.-Teilen vorliegt, die Komponente 2) in Mengen von 2 bis 50 Gew.-Teilen vorliegt und die Komponente 2a) gegebenenfalls in Mengen von 0 bis 50 Gew.-Teilen vorliegt,

dadurch gekennzeichnet, daß sie zusätzlich 3.) aliphatische Polycarbonate mit Gewichtsmittelmolekulargewichten $\overline{M}w$ (gemessen mittels Ultrazentrifugation oder Lichtsteuung) von 20.000 bis 400.000 in Mengen von 1,5 bis 30 Gew.-Teilen enthalten, hergestellt durch anionische, ringöffnende Lösungspolymerisation von cyclischen, aliphatischen Carbonaten bei tiefen Temperaturen, wobei die Summe der Gew.-Teile aus dem Komponenten 1.), 2.), 3.) und gegebenenfalls 2.a) jeweils 100 ist.

Thermoplastische Formmassen aus aromatischem Polycarbonat, Pfropfpolymerisat und gegebenenfalls Copolymerisaten, aufgebaut aus Vinylverbindungen, sind seit langem bekannt. Sie zeichnen sich durch ein ausgewogenes Eigenschaftsprofil in Bezug auf Zähigkeit sowie Wärmeformbeständigkeit aus.

Für die Herstellung von großformatigen und komplizierten Teilen, wobei lange Fließwege vorgegeben sind, ist die Fließfähigkeit der Materialien oft nicht ausreichend. Das vollständige und rasche Ausfüllen der Spritzformen ist in solchen Fällen verbesserungsbedürftig.

Fließhilfsmittel für die genannten Formmassen sind gewöhnlich niedermolekulare oder oligomere Verbindungen. Aufgrund des geringen molekulargewichte und der damit verbindenen Flüchtigkeit lassen sie sich häufig bei den notwendigen hohen Compoundiertemperaturen nur schwer einarbeiten und neigen bei längerer thermischer Beanspruchung der Formteile zum "Ausschwitzen".

Weiterhin zeigen aromatische Polycarbonat/ABS-Formmassen im allgemeinen nur eine ungenügende Beständigkeit gegenüber Chemikalien, insbesondere organische Lösungsmitteln und Lösungsmittelgemischen wie Benzin. Die Formmassen sind daher für Anwendungen, wie Teile für die Kfz-Industrie im Karosserieaußenbereich, wo eine Kraftstoffresistenz unbedingt erforderlich ist, nur mit starken Einschränkungen verwendbar.

Es hat sich nun gezeigt, daß die erfindungsgemäßen Formmassen hohe Fließfähigkeit, ausgezeichnete Lösungsmittelbeständigkeit und gute Zähigkeit aufweisen. Zudem besitzen Formteile aus den erfindungsgemäßen Formmassen eine gute Rohtonqualität. Die Formmassen lassen sich aufgrund des hochmolekularen Aufbaus der Komponenten selbst bei hohen Compoundier-Temperaturen leicht herstellen. Ein "Ausschwitzen" oder "Fogging der Komponenten ist unterbunden.

Erfindungsgemäß einzusetzende aliphatische Polycarbonate sind vorzugsweise solche der Formel (I)

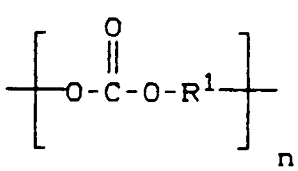

(I) ,

worin "n" eine ganze Zahl größer 40, vorzugsweise von 40 bis 4.000 ist und insbesondere von 50 bis 3.000 ist.

$R^1$ in (I) ist ein lineares $C_3$-$C_{12}$-Alkylen, oder ein Rest der Formeln a) bis m):

a) $-CH_2CH_2CH(CH_3)-$

b) $CH_2CH_2OCH_2CH_2OCH_2CH_2$-,

c) -$CH_2CH(CH_3)CH_2CH_2C(CH_3)_2CH_2$-,

d) 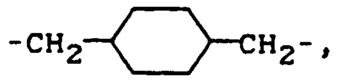 ,

e) 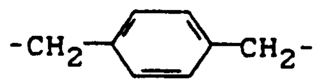 ,

f) 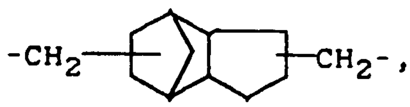 ,

g) 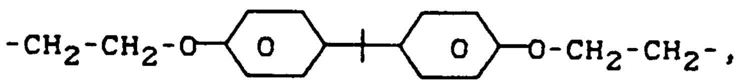 ,

h) 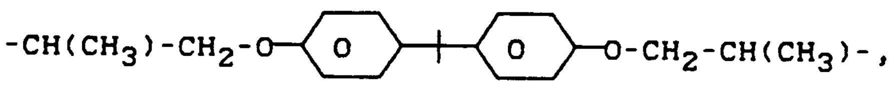 ,

i) 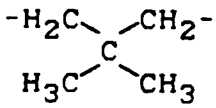 ,

j) 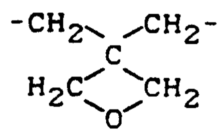 ,

k) 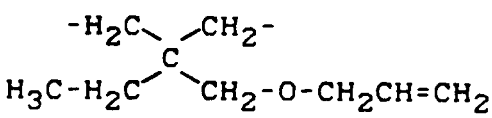 ,

l) 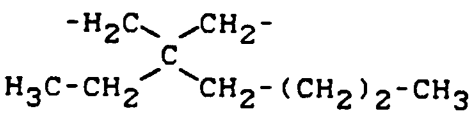 ,

m) $-CH_2-CH_2-O-CH_2-CH_2-$.

Die aliphatischen Polycarbonate können nach üblichen Methoden, z.B. durch Umsetzung oder Phosgenisierung von Diolen (DE-OS 20 01 091, FR-PS 13 91 512, DE-OS 10 31 512, DE-OS 24 46 107, DE-OS 26 05 024, EP 002 641, DE-OS 24 47 349) besser aber durch ringöffnende Masse- und Lösungspolymerisation von cyclischen, aliphatischen Carbonaten hergestellt werden (siehe dazu die deutschen Offenlegungsschriften 15 45 116, 15 45 117, 31 03 135 und 32 04 078).

Das bevorzugte Herstellungsverfahren ist die anionische ringöffnende Lösungpolymerisation von cyclischen aliphatischen Carbonaten bei tiefen Temperaturen gemäß EP-A-0 236 862.

Cyclische aliphatische Carbonate für die Herstellung der erfindungsgemäß einzusetzenden aliphatischen Polycarbonate sind Verbindungen der Formel (II):

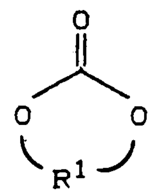

,

worin

$R^1$ die für Formel (I) genannte Bedeutung mit Ausnahme von "m" hat,

und Verbindungen der Formel (III)

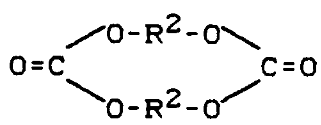

(III),

worin

$R^2$ = ein lineares $C_4$-$C_{12}$-Alkylen odr ein Rest der Formeln

m) $-CH_2CH_2OCH_2CH_2-$ oder

b) $-CH_2CH_2OCH_2CH_2OCH_2CH_2-$ ist.

Bevorzugt werden Carbonate der Formel (II) zur Herstellung der erfindungsgemäß einzusetzenden aliphatischen Polycarbonate verwendet. Besonders bevorzugt ist das Carbonat mit $R^1$ =

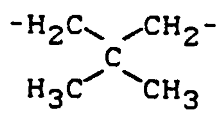

.

Erfindungsgemäß geeignete, thermoplastische, aromatische Polycarbonate gemäß Komponente 1) sind solche auf Basis der Diphenole der Formel (IV)

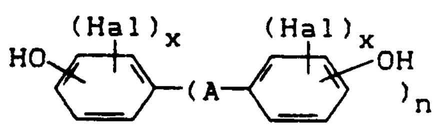

(IV),

worin

A eine Einfachbindung, $C_1$-$C_5$-Alkylen, $C_2$-$C_5$-Alkyliden, ein $C_5$-$C_6$-Cycloalkyliden, -S-, $-SO_2$-oder ein Rest

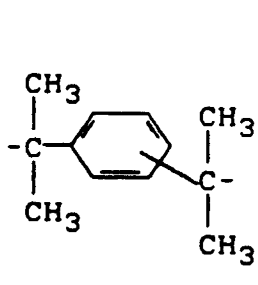

ist,

Hal Chlor oder Brom ist,

x 0, 1 oder 2 und
n 1 oder 0 sind,
und gegebenenfalls zusätzlich der Formel (V)

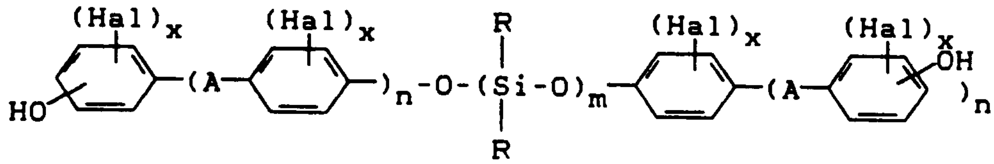

(V)

worin
A, Hal, x und n die für die Formel (IV) genannte Bedeutung haben, die Reste R gleich oder verschieden sind und lineares $C_1$-$C_{10}$-Alkyl, verzweigtes $C_3$-$C_{20}$-Alkyl, $C_6$-$C_{20}$-Aryl, vorzugsweise $CH_3$, entsprechen und m eine ganze Zahl zwischen 5 und 100, vorzugsweise zwischen 20 und 80 ist.

Die Diphenole der Formel (IV) sind bekannt oder nach bekannten Verfahren herstellbar; Polydiorganosiloxane mit Hydroxy-aryloxy-Endgruppen gemäß Formel (V) sind ebenfalls bekannt (vergleiche US-PS 3 419 634) oder nach bekannten Verfahren herstellbar.

Geeigente Diphenole der Formel (IV) sind
Hydrochinon,
Resorcin,
Dihydroxdiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-sulfone und
α-α'-Bis-(hydroxyphenyl)-diisopropylbenzole
sowie deren kernchlorierte und kernbromierte Derivate.

Beispiele für geeignete Diphenole der Formel (IV) sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan und 2,2-Bis-(3,5-dibrom-4-hydroxyphenyl)-propan.

Bevorzugte Diphenole der Formel (IV) sind 2,2-Bis-(4-hydroxyyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Besonders geeignete Diphenole der Formel (V) sind solche, in denen R = Methyl, Ethyl, Propyl, n-Butyl, tert.-Butyl oder Phenyl ist, insbesondere solche der Formel (VI)

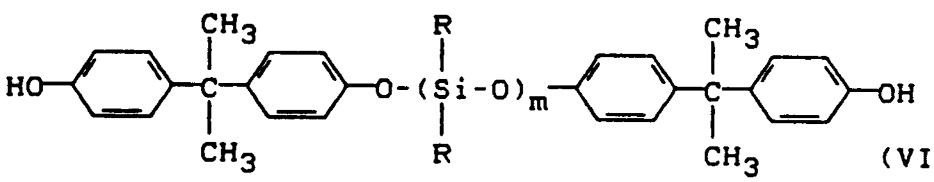

(VI)

worin
die Reste R gleich sind und die vorstehend genannte Bedeutung haben, und m eine ganze Zahl von 5-100, vorzugsweise von 20 bis 80 ist.

Die Diphenole der Formel (V) können z.B. aus den entsprechenden Bis-chlorverbindungen der Formel (VII)

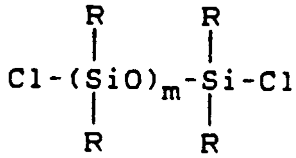

(VII)

und den Diphenolen (IV) z.B. gemäß US-Patent 3 419 635, Spalte 3, in Kombination mit US-Patent 3 189 662 hergestellt werden.

In den Bis-chlorverbindungen (VII) haben R und m die Bedeutung wie in den Diphenolen (V) bzw. (VI).

Erfindungsgemäß geeignete Polycarbonate gemäß Komponente 1.) sind Homopolycarbonate aus einem Diphenol und Copolycarbonate aus mehreren Diphenolen, wobei die Diphenole der Formel (V) nur für die Herstellung von Copolycarbonaten mit den Diphenolen der Formel (IV) eingesetzt werden, und zwar in einer Gewichtsmenge von 1-50 Gew.-%, vorzugsweise von 1,5-25 Gew.-% und insbesondere von 2 bis 10 Gew.-%, bezogen auf die Gewichtssumme der eingesetzten Diphenole der Formeln (IV) und (V).

Erfindungsgemäß geeignete Polycarbonate gemäß Komponente 1.) sind auch Mischungen aus einem Copolycarbonat aus den Diphenolen der Formeln (V) und (IV) und einem anderen siloxanfreien thermoplastischen Polycarbonat, wobei der Gehalt an Diphenolen der Formel (V) in der Polycarbonatmischung, bezogen auf die Gesamtsumme an Diphenolen, wiederum von 1-50 Gew.-% liegt.

Bevorzugte Polycarbonate sind neben dem Bisphenol A-Homopolycarbonat die Copolycarbonate von Bisphenol A mit bis zu 15 Mol-%, bezogen auf die Mol-Summe an Diphenolen, an 2,2-Bis-(3,5-dibrom-4-hydroxyphenyl)-propan und die Copolycarbonate der Diphenole der Formel (IV) mit 1-50 Gew.-% an Diphenolen der Formel (V), vorzugsweise der Formel (VI), bezogen jeweils auf die Gewichtssumme der Diphenole (IV) und (V) bzw. (IV) und (VI).

Die erfindungsgemäß geeigneten Polycarbonate gemäß Komponente 1.) können in bekannter Weise verzweigt sein, und zwar vorzugsweise durch den Einbau von 0,05-2,0 Mol-%, bezogen auf die Summe der eingesetzten Diphenole, an drei- oder mehr als dreifunktionellen Verbindungen, z.B. solchen mit drei oder mehr als drei phenolischen Gruppen.

Die Herstellung der erfindungsgemäß geeigneten Polycarbonate gemäß Komponente 1.) ist bekannt und kann z.B. mit Phosgen nach dem Phasengrenzflächenverfahren oder mit Phosgen nach dem Verfahren in homogener Phase ("Pyridinverfahren") erfolgen, wobei das Molekulargewicht durch eine entsprechende Menge an bekannten Kettenabbrechern eingestellt werden kann (bezüglich polydiorganosiloxanhaltiger Polycarbonate siehe DE-OS 3 334 872 (Le A 22 594).

Die erfindungsgemäß geeigneten Polycarbonate gemäß Komponente 1.) haben mittlere Gewichtsmittelmolekulargewichte ($M_w$, gemessen durch Ultrazentrifugation oder Streulichtmessung) von 10.000-200.000, vorzugsweise von 20.000-80.000.

Geeignete Kettenabbrecher zur Einstellung der Molekulargewichte der Polycarbonate gemäß Komponente 1.) sind z.B. Phenol, p-Chlorphenol, p-tert.-Butylphenol, 2,4,6-Tribromphenol, langkettige Alkylphenole, wie 4-81,3-(Tetramethylbutyl)-phenol (DE-OS 2 842 005), Monoalkylphenole und Dialkylphenole mit insgesamt 8-20 C-Atomen in den Alkylsubstituenten, wie 3,5-di-tert.-Butylphenol, p-Isooctylphenol, p-tert.-Octylphenol, p-Dodecylphenol und 2-)3,5-Dimethyl-heptyl)-phenol und 4-(3,5-Dimethyl-heptyl)-phenol(DE-OS 3 506 472).

Die Menge an Kettenabbrecher beträgt jeweils 0,1 bis 10 Mol-%, bezogen im Falle der phenolischen Kettenabbrecher auf Mole Diphenole und Falle von Monocarbonsäurechlorid-Kettenabbrechern auf Mole Dicarbonsäuredichloride.

Erfindungsgemäß geeignete Pfropfpolymerisate gemäß Komponente 2.) sind erhältlich durch Pfropfung von

2.1.) 5 bis 90 Gew.-Teilen, vorzugsweise 30 bis 80 Gew.-Teilen einer Mischung aus

2.1.1.) 50 bis 95 Gew.-Teilen Styrol, α-Methylstyrol, kernsubstituiertem Styrol, Methylmethacrylat oder Mischungen daraus, und

2.1.2.) 50 bis 5 Gew.-Teilen Acrylnitril, Methacrylnitril, Methylmethacrylat, Maleinsäureanhydrid, N-substituiertem Maleinimid oder Mischungen daraus, auf

2.2.) 95 bis 10 Gew.-Teile, vorzugsweise 70 bis 20 Gew.-Teile eines Kautschuks mit einer Glastemperatur $T_G \leqq 10°$ C.

Zur Herstellung der Pfropfpolymerisate 2.) geeignete Kautschuke sind insbesondere Polybutadien, Butadien/Styrol-Copolymerisate mit bis zu 30 Gew.-%, bezogen auf Kautschuk, eines niederen Alkylesters der Acryl-oder Methacrylsäure (z.B. Methylmethacrylat, Ethylacrylat, Methacrylat oder Ethylmethacrylat), Polyisopren, Polychloropren, Alkylacrylatkautschuke auf der Basis von $C_1$-$C_8$-Alkylarylaten, insbesondere

Ethyl-, Butyl-, Ethylhexylacrylat. Die Alkylacrylatkautschuke können gegebenenfalls bi szu 30 Gew.-%, bezogen auf Kautschuk, Monomere, wie Vinylacetat, Acrylnitril, Styrol, Methylmethacrylat und/oder Vinylether copolymerisiert enthalten. Sie können kleinere Mengen, vorzugsweise ist zu 5 Gew.-%, bezogen auf Kautschuk, vernetzend wirkender ethylenisch ungesättigter Monomeren einpolymerisiert enthalten.

Solche Vernetzer sind z.B. Alkylendiol-di-(meth)-acrylate, Polyesterdi-(meth)-acrylate, Divinylbenzol, Trivinylbenzol, Triallylcyanurat, Allyl-(meth)-acrylat, Butadien und Isopren. Geeigente Acrylatkautschuke sind auch Produkte, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern und einen Acrylatkautschukmantel enthalten. Andere geeignete Kautschuke sind z.B. EPDM-Kautschuke, also Kautschuke aus Ethylen, Propylen und einem unkonjugierten Dienmonomer, und Silikonkautschuke.

Bevorzugte Kautschuke zur Herstellung der Pfropfpolymerisate 2.) sind Dien-, Alkylacrylat- und Silikonkautschuke.

Die Kautschuke liegen im Pfropfpolymerisat 2.) in Form wenigstens partiell vernetzter Teilchens eines mittleren Durchmessers von 0,09-5 $\mu$m, insbesondere 0,1-1 $\mu$m vor. Die Pfropfpolymerisate 2.) können durch radikalische Pfropfpolymerisation der vorstehend definierten Monomerengemische 2.1.) in Gegenwart der zu pfropfenden Kautschuke 2.2.) hergestellt werden. Bevorzugte Herstellungsverfahren für die Pfropfpolymerisate 2.) sind Emulsions-, Lösungs-, Masse- oder Suspensionspolymerisation. Besonders bevorzugte Pfropfpolymerisate 2.) sin ABS-Pfropfpolymerisate. Als kernsubstituierte Styrole seien Halogenstyrole und p-Methylstyrol erwähnt.

Erfindungsgemß geeignete thermoplastische Copolymerisate gemäß Komponente 2a) sind erhältlich durch Copolymerisation von

2a.1.) 50 bis 95 Gew.-Teilen Styrol, $\alpha$-Methylstyrol, kernsubstituiertem Styrol, Methylmethacrylat oder Mischungen daraus, mit

2a.2.) 50 bis 5 Gew.-Teilen Acrylnitril, Methacrylnitril, Methylmethacrylat, N-substituiertem Maleinimid oder Mischungen daraus.

Bevorzugte Copolymerisate 2a) sind solche aus wenigstens einem der Monomeren Styrol, $\alpha$-Methylstyrol, kernsubstituiertem Styrol gemäß 2a.1.) mit wenigstens einem der Monomeren Acrylnitril, Methacrylnitril, Methylmethacrylat, Maleinsäureanhydrid, N-subst.-Maleinimid gemäß 2a.2.).

Die Gewichtsteile der Komponenten 1), 2), 3) und 2a) in den erfindungsgemäßen thermoplastischen Formmassen betragen für die Komponente 1) 15 bis 97,5 Gew.-Teile, vorzugsweise 35 bis 90 Gew.-Teile, für die Komponente 2) 2 bis 50 Gew.-Teile, vorzugsweise 5 bis 35 Gew.-Teile, für die aliphatische Polycarbonat-Komponente 3) 0,5 bis 45 Gew.-Teile, vorzugsweise 1 bis 35 Gew.-Teile, und insbesondere 1,5 bis 30 Gew.-Teile, und für die Komponente 2a) 0 bis 50 Gew.-Teile, vorzugsweise 0 bis 30 Gew.-Teile, wobei die Summe der Gew.-Teile aus den Komponenten 1.), 2.), 3.) und gegebenenfalls 2.a.) jeweils 100 ist.

Copolymerisate 2.a.) entstehen häufig bei der Pfropfpolymerisation zur Herstellung der Komponente 2) als Nebenprodukte, besonders dann, wenn große Mengen Monomere auf kleinen Mengen Kautschuk gepfropft werden.

Die erfindungsgemäß einzusetzende Menge an Copolymerisat 2a) von 0 bis 50 Gew.-Teile, bezogen auf 100 Gew.-Teile des Gemisches aus 1. + 2. + 2a. + 3., bezieht diese Nebenprodukte der Pfropfpolymerisation nicht mit ein.

Die Copolymerisate 2.a.) sind harzartig, thermoplastisch und kautschukfrei. Besonders bevorzugte Copolymerisate 2.a.) sind solche aus Styrol und/oder $\alpha$-Methylstyrol mit Acrylnitril und gegebenenfalls mit Methylmethacrylat.

Besonders bevorzugte Gewichtsverhältnisse im thermoplastischen Copolymerisat 2.a.) sind 60-80 Gew.-% 2.a.1.) und 40-20 Gew.-% 2.a.2.).

Die Copolymerisate 2.a.) können durch radikalische Polymerisation, insbesodnere durch Emulsions-, Suspensions-, Lösungs- oder Massepolymerisation hergestellt werden. Sie besitzen vorzugsweise Molekulargewichte $M_w$ (Gewichtsmittel, ermittelt durch Lichtstreuung oder Sedimentation) von 15.000-200.000.

Die erfindungsgemäßen Formmassen können weitere, für Polycarbonate oder Pfropfpolymerisate und Copolymerisate bekannte Zusätze, wie Stabilisatoren, Pigmente, Entformungsmittel, Flammschutzmittel und/oder Antistatika, in den üblichen Mengen enthalten.

Die erfindungsgemäßen Formmassen, enthaltend die Komponenten 1), 2), die aliphatische Polycarbonat-Komponente 3) und gegebenenfalls die Komponente 2a) und/oder weitere Zusätze, können hergestellt werden, indem man ihre Bestandteile in bekannter Weise vermischt und bei Temperaturen von 200-330° C in üblichen Mischvorrichtungen, wie Innenknetern, Extrudern oder Doppelwellenschnecken, schmelzcompoundiert oder schmelzextrudiert.

Gegenstand der Erfindung ist auch ein Verfahren zur Herstellung von thermoplastischen Formmassen, enthaltend die Komponenten 1), 2), die aliphatische Polycarbonat-Komponente 3 und gegebenenfalls die Komponente 2a), Stabilisatoren, Pigmente, Entformungsmittel, Flammschutzmittel und/oder Antistatika, das dadurch gekennzeichnet ist, daß man die Komponenten 1), 2), 3) und gegebenenfalls die Komponente 2.a.), Stabilisatoren, Pigmente, Entformungsmittel, Flammschutzmittel und/oder Antistatika in bekannter Weise vermischt und danach bei Temperaturen von 200° C bis 330° C in übilchen Mischvorrichtungen schmelzcompoundiert oder schmelzextrudiert.

Die Bestandteile können in bekannter Weise sowohl sukzessive als auch simultan vermischt werden bei etwa 20° C (Raumtemperatur) und auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind Gehäuseteile für Haushaltsgeräte, Formteile für den Kfz-Innenraum und insbesondere für den Kfz-Außenbereich.

Eine weitere Form der Verarbeitung ist die Herstellung von Formkörpern durch Tiefziehen aus vorher hergestellten Platten oder Folien.

Teilchengröße bedeutet immer mittlere Teilchendurchmesser $d_{50}$, ermittelt durch Ultrazentrifugenmessungen nach W. Scholtan et al, Kolloid-Z. und Z. Polymere 250 (1972), 782-796.

## Beispiele

Eingesetzte Polykondensate und Polymerisate, wobei die Verbindungen A die Komponente 1), die Verbindungen B die Komponente 2), die Verbindung C die Komponente 2.a.) und die Verbindungen D die Komponente 3) repräsentieren.

A.1

Polycarbonat auf Basis Bisphenol A mit einer relativen Lösungsviskosität $\eta$rel von 1,26-1,28, gemessen in $CH_2Cl_2$ bei 25° C und einer Konzentration von 0,5 g/100 ml.

B.1

SAN-Pfropfpolymerisat von 50 Gew.-% Styrol/Acrylnitril-Gemisch (im Gewichtsverhältnis 72:28) auf 50 Gew.-% teilchenförmiges Polybutadien mit einem mittleren Teilchendurchmesser ($d_{50}$) von 0,4 $\mu$m, erhalten durch Emulsionpolymerisation.

B.2

SAN-Pfropfpolymerisat von 50 Gew.-% Styrol/Acrylnitril-Gemisch (im Gewichtsverhältnis 72:28) auf 50 Gew.-% teilchenförmiges Polysiloxan mit einem mittleren Teilchendurchmesser ($d_{50}$) von 0,3 $\mu$m, erhalten durch Emulsionpolymerisation.

C.

Styrol/Acrylnitril-Copolymerisat mit einem Styrol/Acrylnitril-Verhältnis vn 72:28 und einer Grenzviskosität $[\eta]$ = 0,55 dl/g, gemessen in Dimethylformamid bei 20° C.

D.1

Aliphatisches Polycarbonat auf Basis von Neopentylalkohol (2,2-Dimethyl-propandiol (1,3)), erhalten durch ringöffnende anionische Polymerisation von Neopentylglykolcarbonat mit einer relativen Lösungsviskosität $\eta$rel von 2,55 (2 gew.-%ige Lösung in $CH_2Cl_2$ bei 20° C). $\overline{M}w$ = 100 000 g/mol.

D.2

Aliphatisches Polycarbonat auf Basis von Neopentylalkohol (2,2-Dimethyl-propandiol (1,3)), erhalten durch ringöffnende anionische Polymerisation von Neopentylglykolcarbonat mit einer relativen Lösungsviskosität $\eta$rel von 3,4 (2 gew.-%ige Lösung in $CH_2Cl_2$ bei 20° C). $\overline{M}w$ = 150 000 g/mol.

D.3

Aliphatisches Polycarbonat auf Basis von Neopentylalkohol (2,2-Dimethyl-propandiol (1,3)), erhalten durch ringöffnende anionische Polymerisation von Neopentylglykolcarbonat mit einer relativen Lösungsviskosität $\eta$rel von 2,37 (2 gew.-%ige Lösung in $CH_2Cl_2$ bei 20° C). $\overline{M}$w = 95 000 g/mol.

D.4

Aliphatisches Polycarbonat auf Basis von Neopentylalkohol (2,2-Dimethyl-propandiol (1,3)), erhalten durch ringöffnende anionische Polymerisation von Neopentylglykolcarbonat mit einer relativen Lösungsviskosität $\eta$rel von 4,55 (2 gew.-%ige Lösung in $CH_2Cl_2$) bei 20° C). $\overline{M}$w = 210 000 g/mol.

E.

Phosphorigsäureester des Bis(2-hydroxy-3-cyclohexyl-5-methyl-phenyl)methans als Stabilisator.

Die Molekulargewichte ($\overline{M}$w) der Komponenten D wurden durch Gelpermeationschromatographie auf Grundlage einer Eichkurve für Polyneopentylglykolcarbonat bestimmt.

Die Komponenten wurden in einem 1,3-l-Innenkneter compoundiert.

Die Formkörper wurden mit einer Spritzgußmaschine bei 260° C bzw. 280° C hergestellt.

Die Kerbschlagzähigkeit $a_k$ nach Izod wurde an Stäben der Abmessung 80 x 10 x 4 mm gemäß ISO 180 1 A bei den in den Beispielen angegebenen Temperaturen bestimmt.

Die Fließfähigkeit wurde beurteilt über den bei der verwendeten Spritzgußmaschine (Massetemperatur: 260° C, 280° C) notwendigen Fälldruck (s. Johannaber, Kunststoffe 74 (1984, 1; S. 1-5) zur Herstellung von Stäben der Abmessung 80 x 10 x 4 mm.

Das Spannungsrißverhalten wurde an Stäben der Abmessung 80 x 10 x 4 mm, Massetemperatur 260° C untersucht. Als Kraftstoffsimulanz wurde eine Mischung aus 50 % Toluol und 50 % Isooctan verwendet. Die Probekörper wurden mittels einer Kreisbogenschablone vorgedehnt und 5 min bei Zimmertemperatur im Kraftstoffsimulans gelagert. Die Vordehnung $\epsilon_x$ betrug 0,2 - 2,4 %. Das Spannungsrißverhalten wurde über die Rißbildung bzw. den Bruch in Abhängigkeit der Vordehnung beurteilt.

Die Zusammensetzung der geprüften Materialien sowie die erhaltenen Daten sind in den folgenden Tabellen zusammengefaßt:

Tabelle 1

| | erfindungsgemäße Beispiele (Gew.-Tl.) 5 | Vergleichsbeispiel (Gew.-Tl.) 6 |
|---|---|---|
| **Komponenten** | | |
| A.1 | 60 | 60 |
| B.1 | 24 | 24 |
| C. | 16 | 16 |
| D.2 | 2 | - |
| E. | 0,25 | 0,25 |
| **Prüfungen** | | |
| Kerbschlagzähigkeit $a_K$ | | |
| $a_K$ (RT) (kJ/m²) | 55 | 54 |
| $a_K$ (-30° C) (kJ/m²) | 54 | 45 |
| (260° C Massetemperatur) | | |
| Fülldruck (bar) | | |
| bei 260° C | 80 | 102 |

Tabelle 2

| | erfindungsgemäße Beispiele (Gew.-Tl.) 7 | 8 | 9 | Vergleichsbeispiel (Gew.-Tl.) 10 |
|---|---|---|---|---|
| **Komponenten** | | | | |
| A.1 | 60 | 60 | 60 | 60 |
| B.1 | 25 | 25 | 25 | 25 |
| C. | 10 | 5 | - | 15 |
| D.3 | 5 | 10 | 15 | - |
| E. | 0,25 | 0,25 | 0,25 | 0,25 |
| **Prüfungen** | | | | |
| Kerbschlagzähigkeit $a_K$ $a_K$ (RT) ($kJ/m^2$) ($260^0$ C Massetemperatur) | 47 | 50 | 44 | 47 |
| Fülldruck (bar) bei $260^0$ C | 60 | 49 | 45 | 75 |
| Spannungsrißverhalten KR/OR* bei Vordehnung $\epsilon_x$ (%) | 0,6 | 1,2 | 2,0 | 0,6 |
| Bruch bei Vordehnung $\epsilon_x$ (%) | 1,2 | - | - | 0,7 |
| kein Bruck bei Vordehnung $\epsilon_x$ (%) | - | 2,4 | 2,4 | - |

*KR/OR: Kanten-/Oberrisse

Tabelle 3

| | erfindungsgemäße Beispiele (Gew.-Tl.) 11 | 12 | 13 | Vergleichsbeispiel (Gew.-Tl.) 14 |
|---|---|---|---|---|
| **Komponenten** | | | | |
| A.1 | 85 | 80 | 67,5 | 90 |
| B.1 | 10 | 10 | 10 | 10 |
| D.4 | 5 | 10 | 22,5 | - |
| E. | 0,25 | 0,25 | 0,25 | 0,25 |
| **Prüfungen** | | | | |
| Kerbschlagzähigkeit $a_K$ $a_K$ (RT) ($kJ/m^2$) ($260^0$ C Massetempertur) | 65 | 63 | 29 | 63 |
| Fülldruck (bar) bei $260^0$ C | 155 | 111 | 70 | 171 |
| Spannungsrißverhalten | | | | |
| KR/OR* bei Vordehnung $\varepsilon_x$ (%) | 0,4 | 0,4 | - | - |
| Bruch bei Vordehnung $\varepsilon_x$ (%) | 0,6 | 0,7 | - | 0,2 |
| kein Bruch bei Vordehnung $\varepsilon_x$ (%) | - | - | 2,4 | - |

*KR/OR: Kanten-Oberrisse

## Patentansprüche

**1.** Thermoplastische Formmassen enthaltend
1.) thermoplastische, aromatische Polycarbonate
2.) Pfropfpolymerisate, erhältlich durch Pfropfung von 2.1.) 5 bis 90 Gew.-Teilen einer Mischung aus
2.1.1.) 50 bis 95 Gew.-Teilen Styrol, α-Methylstyrol, kernsubstituiertem Styrol, Methylmethacrylat oder Mischungen daraus und
2.1.2.) 50 bis 5 Gew.-Teilen Acrylnitril, Methacrylnitril, Methylmethacrylat, Maleinsäureanhydrid, N-substituiertem Maleinimid oder Mischungen daraus auf
2.2.) 95 bis 10 Gew.-Teile eines Kautschuks mit einer Glastemperatur $T_G \leq 10°$ C und gegebenenfalls
2.a) thermoplastische Copolymerisate, erhältlich durch Copolymerisation von
2.a.1.) 50 bis 95 Gew.-Teilen Styrol, α-Methylstyrol, kernsubstituiertem Styrol, Methylmethacrylat oder Mischungen daraus mit

2.a.2.) 50 bis 5 Gew.-Teilen Acrylnitril, Methacrylnitril, Methylmethacrylat, N-substituiertem Maleinimid oder Mischungen daraus,
wobei die Komponente 1) in Mengen von 15 bis 97,5 Gew.-Teilen vorliegt, die Komponente 2) in Mengen von 2 bis 50 Gew.-Teilen vorliegt und die Komponente 2a) gegebenenfalls in Mengen von 0 bis 50 Gew.-Teilen vorliegt,
dadurch gekennzeichnet, daß sie zusätzlich 3.) aliphatische Polycarbonate mit Gewichtsmittelmolekulargewichten $\overline{M}w$ (gemessen mittels Ultrazentrifugation oder Lichtsteuung) von 20.000 bis 400.000 in Mengen von 1,5 bis 30 Gew.-Teilen enthalten, hergestellt durch anionische, ringöffnende Lösungspolymerisation von cyclischen, aliphatischen Carbonaten bei tiefen Temperaturen, wobei die Summe der Gew.-Teile aus dem Komponenten 1.), 2.), 3.) und gegebenenfalls 2.a) jeweils 100 ist.

**2.** Thermoplastische Formmassen gemäß Anspruch 1, dadurch gekennzeichnet, daß die aliphatische Polycarbonate der Formel (I)

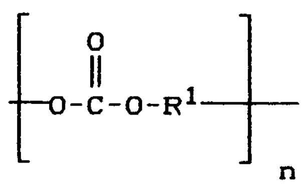

entsprechen, worin "n" eine ganze Zahl größer 40 ist und worin "$R^1$" ein lineares $C_3$-$C_{12}$-Alkylen oder ein Rest der Formeln a) bis m)

a) $-CH_2CH_2CH(CH_3)-$

b) $-CH_2CH_2OCH_2CH_2OCH_2CH_2-$,

c) $-CH_2CH(CH_3)CH_2CH_2C(CH_3)_2CH_2-$,

d) 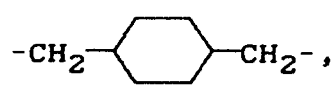 e) 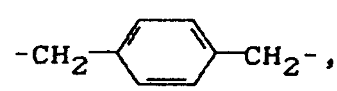

f) 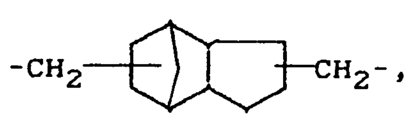

g) 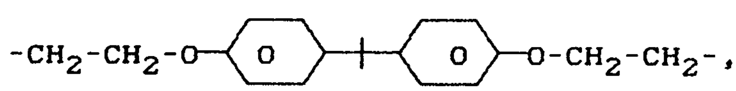

h) 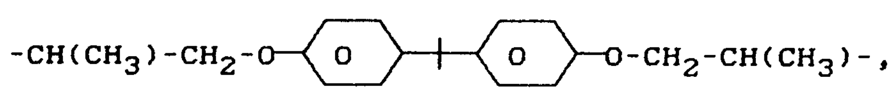

i) 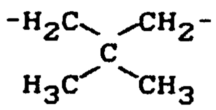 , j) 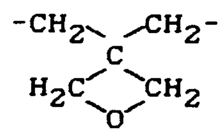 ,

k) 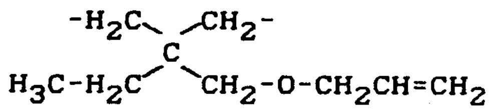 ,

l) 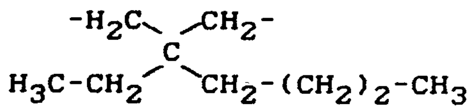

m) $-CH_2-CH_2-O-CH_2-CH_2-$ ist.

3. Formmassen gemäß Anspruch 1, dadurch gekennzeichnet, daß die Komponente 1.) ein thermoplastisches Polycarbonat auf Basis der Diphenole der Formel (IV)

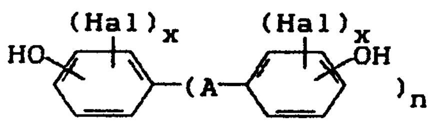 (IV),

worin

A eine Einfachbindung, $C_1$-$C_5$-Alkylen, $C_2$-$C_5$-Alkyliden, ein $C_5$-$C_6$-Cycloalkyliden, -S-, $-SO_2-$ oder ein Rest

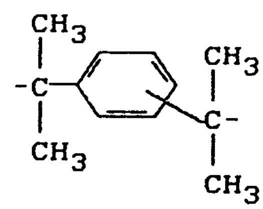 ist,

Hal Chlor oder Brom ist,
x 0, 1 oder 2 und
n 1 sind,

und gegebenenfalls zusätzlich der Formel (V)

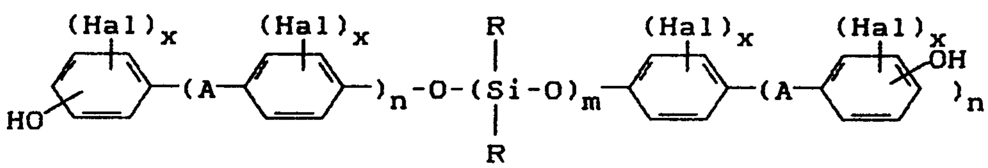

(V)

worin

A, Hal, x und n die für die Formel (IV) genannte Bedeutung haben, die Reste R gleich oder verschieden sind und lineares $C_1$-$C_{10}$-Alkyl, verzweigtes $C_3$-$C_{20}$-Alkyl, $C_6$-$C_{20}$-Aryl entsprechen und m eine ganze

Zahl zwischen 5 und 100 ist.

**4.** Formmassen gemäß Anspruch 1, dadurch gekennzeichnet, daß sie zusätzlich Stabilisatoren, Pigmente, Entformungsmittel, Flammschutzmittel und/oder Antistatika enthalten.

**5.** Verfahren zur Herstellung der Formmassen der Ansprüche 1 bis 4, dadurch gekennzeichnet, daß man die Komponenten 1), 2), die aliphatische Polycarbonat-Komponente 3) und gegebenenfalls die Komponenten 2.a.), Stabilisatoren, Pigmente, Entformungsmittel, Flammschutzmittel und/oder Antistatika in bekannter Weise vermischt und danach bei Temperaturen von 200° C bis 330° C in üblicher Mischvorrichtung schmelzcompoundiert oder schmelzextrudiert.

## Claims

**1.** Thermoplastic moulding compounds containing

1.) thermoplastic aromatic polycarbonates

2.) graft polymers and, optionally, 2.1) 5 to 90 parts by weight of a mixture of

2.1.1.) 50 to 95 parts by weight styrene, α-methyl styrene, nucleus-substituted styrene, methyl methacrylate or mixtures thereof and

2.1.2.) 50 to 5 parts by weight acrylonitrile, methacrylonitrile, methyl methacrylate, maleic anhydride, N-substituted maleic imide or mixtures thereof onto

2.2.) 95 to 10 parts by weight of a rubber having a glass temperature $T_G$ of $\leqq 10\,°C$ and optionally

2.a.) thermoplastic copolymers obtainable by copolymerization of

2.a.1.) 50 to 95 parts by weight styrene, α-methyl styrene nucleus-substituted styrene, methyl methacrylate or mixtures thereof with

2.a.2.) 50 to 5 parts by weight acrylonitrile, methacrylonitrile, methyl methacrylate, N-substituted maleic imide or mixtures thereof,

component 1) being present in quantities of 15 to 97.5 parts by weight, component 2) being present in quantities of 2 to 50 parts by weight and component 2a) optionally being present in quantities of 0 to 50 parts by weight,

characterized in that they additionally contain

3.) aliphatic polycarbonates having weight average molecular weights $\overline{M}w$ (as measured by ultracentrifugation or light scattering) in the range from 20,000 to 400,000 in quantities of 1.5 to 30 parts by weight prepared by anionic ring-opening solution polymerization of cyclic aliphatic carbonates at low temperatures, the total of the parts by weight of components 1.), 2.), 3.) and optionally 2.a) being 100

**2.** Thermoplastic moulding compounds as claimed in claim 1, characterized in that the aliphatic polycarbonates correspond to formula (I)

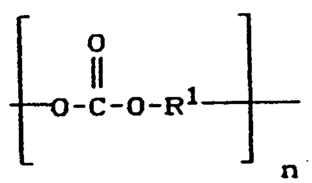

in which n is an integer of greater than 40 and $R^1$ is a linear $C_{3-12}$ alkylene radical or a radical corresponding to formulae a) to m) below

a) $-CH_2CH_2CH(CH_3)-$

b) $-CH_2CH_2OCH_2CH_2OCH_2CH_2-$,

c) $-CH_2CH(CH_3)CH_2CH_2C(CH_3)_2CH_2-$,

d) 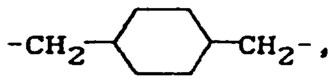 e) 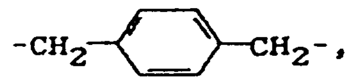

f) 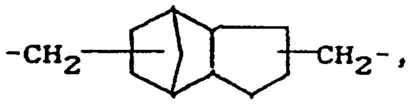

g) 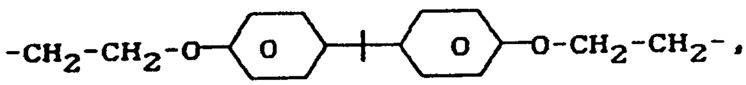

h) 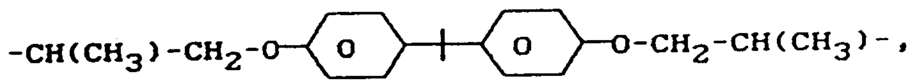

i) 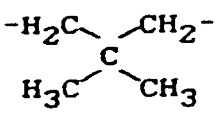 , j) 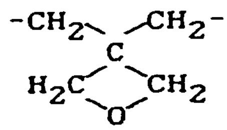

k) 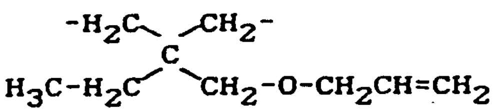

l) 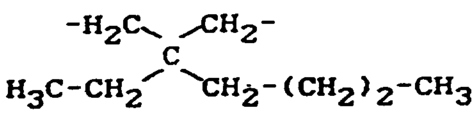

m) $-CH_2-CH_2-O-CH_2-CH_2-$ ist.

3. Moulding compounds as claimed in claim 1, characterized in that component 1.) is a thermoplastic polycarbonate based on diphenols corresponding to formula (IV)

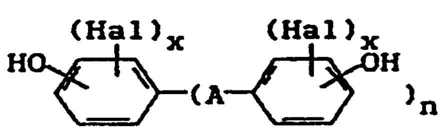 (IV),

in which

A is a single bond, $C_{1-5}$ alkylene, $C_{2-5}$ alkylidene, a $C_{5-6}$ cycloalkylidene, -S-, $-SO_2-$ or a radical

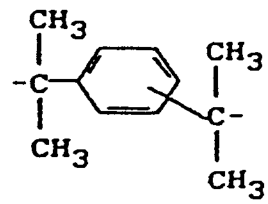

Hal is chlorine or bromine,
x = 0, 1 or 2 and
n = 1
and, optionally, to formula (V)

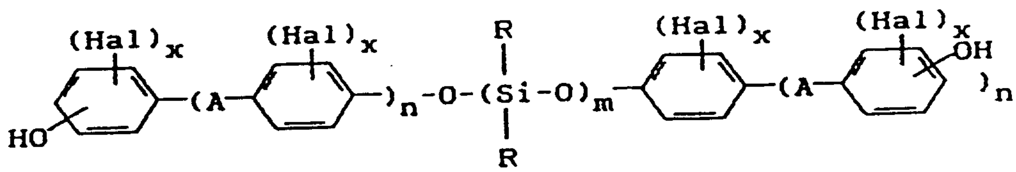

(V)

in which
A, Hal, x and n have the meanings defined for formula (IV), the substituents R are the same or different and represent linear $C_{1-10}$ alkyl, branched $C_{3-20}$ alkyl, $C_{6-20}$ aryl and m is an integer of from 5 to 100.

**4.** Moulding compounds as claimed im claim 1, characterized in that they additionally contain stabilizers, pigments, mould release agents, flameproofing agents and/or antistatic agents.

**5.** A process for the production of the moulding compounds claimed in claims 1 to 4, characterized in that components 1), 2), the aliphatic polycarbonate component 3) and, optionally, components 2.a.), stabilizers, pigments, mould release agents, flameproofing agents and/or antistatic agents are mixed in known manner and the resulting mixture is then melt-compounded or melt-extruded in standard mixing units at temperatures in the range from 200 °C to 330 °C.

**Revendications**

**1.** Matières moulables thermoplastiques contenant :
1) des polycarbonates aromatiques thermoplastiques,
2) des polymères greffés que l'on obtient par greffage de :
2.1) 5 à 90 parties en poids d'un mélange de :
2.1.1) 50 à 95 parties en poids de styrène, d'α-méthylstyrène, de styrène substitué sur le noyau, de méthacrylate de méthyle ou de mélanges de ceux-ci et,
2.1.2) 50 à 5 parties en poids d'acrylonitrile, de méthacrylonitrile, de méthacrylate de méthyle, d'anhydride maléique, d'imide maléique N-substitué ou de mélanges de ceux-ci ;
2.2.) Sur 95 à 10 parties en poids d'un caoutchouc ayant une température de transition vitreuse Tg ≤ à 10 °C et, le cas échéant,
2.a) des copolyrmères thermoplastiques que l'on obtient par copolymérisation de
2.a.1) 50 à 95 parties en poids de styrène, d'α-méthylstyrène, de styrène substitué sur le noyau, de méthacrylate de méthyle ou de mélanges de ceux-ci et de
2.a.2) 50 à 5 parties en poids d'acrylonitrile, de méthacrylonitrile, de méthacrylate de méthyle, d'imide maléique N-substitué ou de mélanges de ceux-ci,
le composant 1) étant présent en quantités de 15 à 97,5 parties en poids, le composant 2) étant présent en quantités de 2 à 50 parties en poids et le composant 2.a) étant, le cas échéant, présent en quantités de 0 à 50 parties en poids,
caractérisées en ce qu'elles contiennent de plus :

3) des polycarbonates aliphatiques ayant un poids moléculaire moyen en poids Mw (mesuré par ultracentrifugation ou par diffusion de lumière) compris entre 20 000 et 400 000, en quantités de 1,5 à 30 parties en poids, préparés par polymérisation anionique en solution, avec ouverture de cycles, de carbonates aliphatiques cycliques à des températures faibles, la somme des parties en poids des composants 1), 2) et 3) et, le cas échéant 2.a) valant à chaque fois 100.

**2.** Matières moulables thermoplastiques selon la revendication 1, caractérisées en ce que les polycarbonates aliphatiques correspondent à la formule(I)

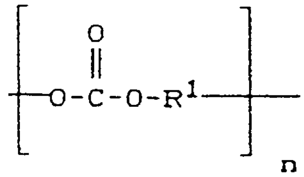

dans laquelle "n" représente un nombre entier supérieur à 40 et $R^1$ représente un groupement alkylène linéaire en $C_3$-$C_{12}$ ou un radical dont la formule est l'une des formules a) à m)

a) $-CH_2CH_2CH(CH_3)-$

b) $-CH_2CH_2OCH_2CH_2OCH_2CH_2-$,

c) $-CH_2CH(CH_3)CH_2CH_2C(CH_3)_2CH_2-$,

d) 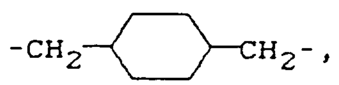

e) 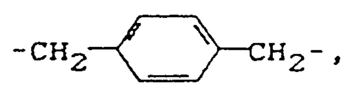

f) 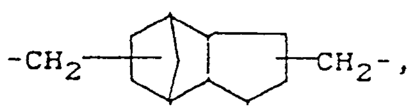

g) 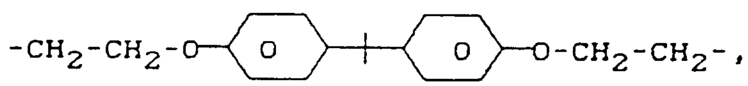

h) 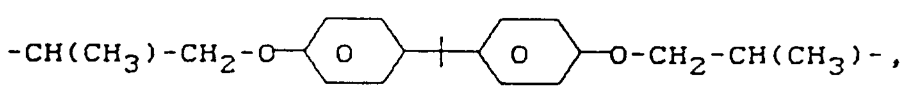

i) 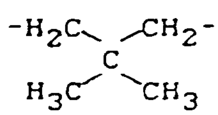 ,

j) 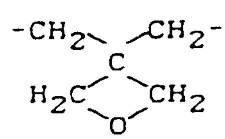

k) 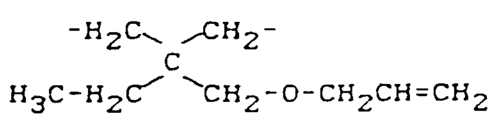

l) 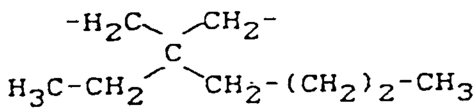

m) $-CH_2-CH_2-O-CH_2-CH_2-$.

**3.** Matières moulables selon la revendication 1, caractérisées en ce que le composant 1) est un polycarbonate à base des diphénols de formule (IV)

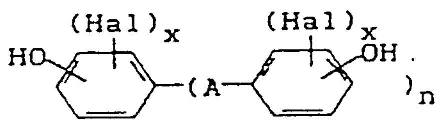

(IV),

dans laquelle

A représente un liaison simple, un groupement alkylène en $C_1$-$C_5$, un groupe alkylidène en $C_2$-$C_5$, un groupement cycloalkylidène en $C_5$-$C_6$, -S-, $-SO_2-$, ou un radical

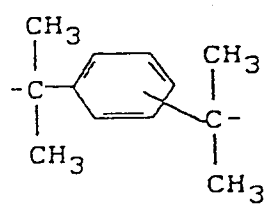

Hal est un atome de chlore ou de brome,
x vaut 0, 1 ou 2, et
n vaut 1,

et de plus, le cas échéant, de formule (V)

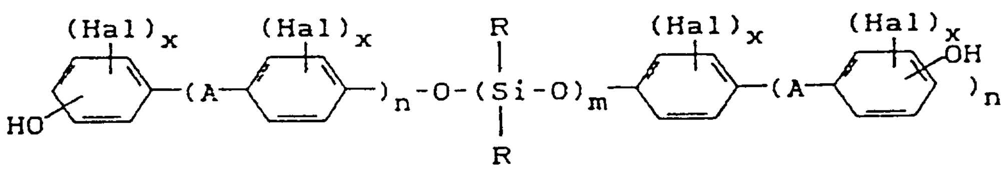

(V)

dans laquelle

A, Hal, x et n ont les significations données pour la formule (IV), les radicaux R peuvent être identiques ou différents et correspondent à un groupement alkyle linéaire en $C_1$-$C_{10}$, un groupement alkyle ramifié en $C_3$-$C_{20}$, un groupement aryle en $C_6$-$C_{20}$ et m est un nombre entier compris entre 5 et 100.

**4.** Matières moulables selon la revendication 1, caractérisées en ce qu'elles contiennent de plus des stabilisants, des pigments, des agents de démoulage, des agents ignifuges et/ou des antistatiques.

**5.** Procédé de préparation des matières moulables des revendications 1 à 4, caractérisé en ce qu'on mélange d'une manière connue les composants 1), 2), le composant 3) constitué de polycarbonates aliphatiques et le cas échéant le composant 2.a.), des stabilisateurs, des pigments, des agents de démoulage, des agents ignifuges et/ou des antistatiques et qu'après cela, on procède, à des températures comprises entre 200 °C et 330 °C, à un mélange en milieu fondu dans un dispositif de mélange

usuel ou à une extrusion en milieu fondu.